# EUROPÄISCHE PATENTANMELDUNG

(11) **EP 2 617 914 A1**
(43) Veröffentlichungstag der Anmeldung: **24.07.2013**
(21) Anmeldenummer: 12000381.9
(22) Anmeldetag: 19.01.2012
(51) Int. Cl.: E04D 1/18, E04D 1/20

(54) **Dachplatte und Dacheindeckungssystem**

(71) Anmelder: Rupp, Josef, 83083 Riedering (DE); Rupp, Andreas, 83083 Riedering (DE)
(72) Erfinder: Rupp, Josef, 83083 Riedering (DE); Rupp, Andreas, 83083 Riedering (DE)
(74) Vertreter: Flach, Dieter Rolf Paul

(57) **Zusammenfassung**

Die vorliegende Erfindung offenbart eine Dachplatte (1) und ein Dacheindeckungssystem bestehend aus mindestens zwei Dachplatten (1) und einer Trägervorrichtung (16), wobei die Dachplatten miteinander verbunden sind und auf der Trägervorrichtung (16) aufliegen. Die erfindungsgemäße Dachplatte ist so aufgebaut, dass bei einem mit erfindungsgemäßen Dachplatten eingedecktes Dach eine Dachplatte aus dem Verbund von Dachplatten gelöst werden kann, ohne dass benachbarte Dachplatten aus dem Verbund gelöst werden müssen.

## Beschreibung

Die vorliegende Erfindung betrifft eine Dachplatte und ein Dacheindeckungssystem zur Eindeckung von Dachflächen, wobei eine einzelne Dachplatte aus einem Verbund von Dachplatten demontiert werden kann, ohne benachbarte Dachplatten aus dem Verbund von Dachplatten demontieren zu müssen.

Bei herkömmlichen Dachplatten bzw. Dachziegeln und daraus bestehenden Dacheindeckungssystemen besteht das Problem, dass beim Auswechseln beschädigter Dachziegel die benachbarten Dachziegel ebenfalls angehoben oder gar mit demontiert werden müssen. Zum Einfügen einer die beschädigte Dachplatte bzw. den beschädigten Dachziegel ersetzende Dachplatte bzw. Dachziegel müssen dann wiederum die benachbarten Dachplatten angehoben bzw. demontiert werden. Dies erhöht die Gefahr, dass auch benachbarte Dachziegel beschädigt werden können. Weiterhin ist eine entsprechende Austauschprozedur einer Dachplatte in einem Dacheindeckungssystem für denjenigen, der die Demontage durchführt, eine arbeits- und zeitaufwändige Prozedur.

Zudem erlangt in der heutigen Zeit die Solartechnik zunehmende Bedeutung. Zum einen werden so genannte Solarkollektoren eingesetzt, die von flüssigen Medien wie beispielsweise Wasser durchströmt werden, das durch die Sonneneinstrahlung erwärmt wird. Dadurch kann der Warmwasserbedarf eines Haushaltes zu einem großen Teil gedeckt werden.

Daneben erhält aber auch die so genannte Photovoltaik zunehmende Bedeutung, mit der Strahlungsenergie der Sonne in elektrische Energie umgewandelt werden kann. Dazu werden Solarkollektoren, nachfolgend auch kurz als Solarmodule bezeichnete Photovoltaik-Module häufig auf Dächern montiert, die allerdings in der Regel nur eine Teilfläche der mit Dachziegeln belegten Dächer abdecken.

Die EP 1 703 037 B1 offenbart ein Bauelement mit einer Oberseite, eine zur Oberseite gegenüberliegende Unterseite, mit einem oberen Rand, mit einem unteren Rand, mit einem an der Unterseite angeordneten Auflager, das im firstseitigen Bereich des oberen Randes angeordnet ist, mit einem ebenfalls an der Unterseite angeordneten Halteelement, das firstseitig vom unteren Rand angeordnet ist, wobei das Auflager und das Halteelement eine Abstützeinrichtung bilden, die die Ausrichtfläche definiert.

Die DE 10 2004 015 305 A1 offenbart eine Solarzelleneinheit mit einer Sichtfläche, einer zur Sichtfläche gegenüberliegenden Unterseite, einem Rahmenabschnitt in Form einer firstseitigen Unterlappung und einem Rahmenabschnitt in Form einer traufenseitigen Überlappung.

Die DE 195 21 098 A1 offenbart ein Bauelement mit photoelektrischen Zellen in Form einer Dachplatte. Das Bauelement mit photoelektrischen Zellen umfasst dabei eine Oberseite, eine zur Oberseite gegenüberliegende Unterseite, eine firstseitige Unterlappung, eine traufenseitige Überlappung, einen profilierten Seitenrand, der auf der Unterlappung angeordnet ist, eine weitere Profilierung, die in der Überlappung angeordnet ist, und zwei auf der Unterseite des Bauelementes angeordnete Hohlprofile, die eine Ausricht- und/oder Montagefläche definieren.

Die US 4 336 413 A1 offenbart eine Photovoltaikplatte mit einer Oberseite, einer zur Oberseite gegenüberliegenden Unterseite, einem firstseitigen Rand, einem traufenseitigen Rand, Dichtflügel, die auf dem firstseitigen Rand angeordnet sind, und Dichtfugen, die auf dem traufenseitigen Rand angeordnet sind.

Aufgabe der vorliegenden Erfindung ist es von daher insbesondere eine für die Photovoltaik geeignete Dachkonstruktion zu schaffen, mit der insbesondere mit Photovoltaikelementen ausgestattete Dachplatten effizient und wirksam verbaut werden können.

Die Aufgabe wird bezüglich der Dachplatte entsprechend den im Anspruch 1 angegebenen Merkmalen und bezüglich eines Dacheindeckungssystems entsprechend den im Anspruch 13 angegebenen Merkmalen gelöst. Vorteilhafte Ausgestaltungen der Erfindung sind in den Unteransprüchen angegeben.

Mit der vorliegenden Erfindung ist es möglich unter Verwendung der erfindungsgemäßen Dachplatten ein gesamtes Dach einzudecken, also bei Bedarf ein gesamtes Dach mit Photovoltaikelementen, die Teil der erfindungsgemäßen Dachplatte sein können zu bedecken. Dadurch müssen die erfindungsgemäßen vorzugsweise mit Photovoltaikelementen ausgestatteten Dachplatten auch nicht auf einem bestehenden Dach, d.h. auf Dachziegeln montiert werden sondern können insbesondere auch bei Neubauten anstelle eines herkömmlichen Daches unter Verzicht auf die herkömmlichen Dachziegel direkt als Dachkonstruktion eingesetzt werden. Gegebenenfalls unter Verwendung von entsprechend angepassten oder anpassbaren einzelnen Dachelementen kann im Rahmen der Erfindung jede beliebige Dachkonstruktion umgesetzt oder nachgebildet werden. So können beispielsweise auch Dachfenster durch geeignet angepasste Dachelemente bzw. Dachplatten integriert werden.

Im Rahmen der Erfindung ist dabei sichergestellt, dass eventuell zwischen den bevorzugt mit Photovoltaikelementen ausgestatteten Dachplatten eindringendes Wasser durch eine besonders angepasste Unterkonstruktion nach unten zur Traufe hin abgeführt wird, so dass der Dachraum darunter stets trocken bleibt.

Als besonders überraschend muss angemerkt werden, dass es im Rahmen der Erfindung gleichwohl möglich ist auch nachträglich noch an beliebiger Stelle eine einzelne erfindungsgemäße Dachplatte einfach zu entfernen und bei Bedarf durch ein anderes Austauschelement zu ersetzen. Die mit einer einzelnen Dachplatte in Anbaurichtung verketteten und benachbarten Dachplatten müssen dazu nicht entfernt werden. Umso überraschender ist dabei, dass dieses erfindungsgemäße Konzept nicht zu Lasten der Dichtigkeit geht.

Es überrascht ebenfalls, dass es im Rahmen des erfindungsgemäßen Dachsystems auch temperaturbedingte Längenausdehnungen der einzelnen Dachplatten, d.h. der insbesondere mit den Photovoltaikelementen besetzten Dachplatten problemlos möglich ist, insbesondere in der Falllinie, ohne dass hierdurch Undichtigkeitsprobleme entstehen würden. Dabei umfasst eine erfindungsgemäße Dachplatte eine Sichtfläche oder Oberseite, eine zur Sichtfläche oder Oberseite gegenüberliegende Unterseite, eine firstseitige Unterlappung, eine traufenseitige Überlappung, eine erste Halteeinrichtung, die auf/in der Unterlappung oder firstseitig der Unterlappung angeordnet ist, eine zweite Halteeinrichtung, die auf/in der Überlappung oder firstseitig der Überlappung angeordnet ist, und eine auf der Unterseite der Dachplatte angeordnete Abstützeinrichtung, die eine Ausricht- und/oder Montagefläche definiert, wobei die Abstützeinrichtung und/oder die Unterseite der Dachplatte einen sich vom firstseitigen Ende aus über eine Teillänge der Dachplatte erstreckenden Abschnitt aufweist, in welchem die Abstützeinrichtung und/oder die Unterseite der Dachplatte unter Ausbildung eines Freiraums im Abstand zur Montagefläche verläuft.

Bei einem Aufbringen bzw. einem Montieren einer erfindungsgemäßen Dachplatte auf dem Dach eines Hauses bzw. auf einer auf dem Dach eines Hauses vorgesehenen Trägervorrichtung liegt die erfindungsgemäße Dachplatte im Bereich ihrer Montagefläche auf der Trägervorrichtung bzw. auf der Unterkonstruktion des Dachs auf. Eine erfindungsgemäße Dachplatte kann traufenseitig von der Unterkonstruktion bzw. der Trägervorrichtung dadurch ausgekippt werden, dass der sich über die Teillänge der Dachplatte erstreckende Abschnitt auf der Trägervorrichtung bzw. der Unterkonstruktion zum Aufliegen kommt, so dass die Dachplatte einen vorgegebenen Kippwinkel zur Montagefläche aufweist und nicht mehr plan auf der Unterkonstruktion bzw. der Trägervorrichtung aufliegt. Durch das Auskippen der Dachplatte aus einem Verbund von Dachplatten wird die Verbindung zwischen der ausgekippten Dachplatte und der diese Dachplatte traufenseitig und firstseitig umgebenden Dachplatten gelöst.

Bei der Unterlappung kann es sich beispielsweise um eine schiefe Ebene handeln, wobei die Unterlappung von dem First zur Traufe hin ansteigend ist. Jedoch ist die vorliegende Erfindung auf eine entsprechende Ausgestaltung der Unterlappung nicht begrenzt. Die Unterlappung kann beispielsweise auch stufenförmig oder rund ausgestaltet sein.

Bei der Überlappung handelt es sich um das Gegenstück zu der beschriebenen Unterlappung, wobei die Überlappung bündig an der Unterlappung einer traufenseitig angeordneten Dachplatte angrenzt. Folglich kann es sich bei der Überlappung auch um eine schiefe Ebene handeln, wobei die Überlappung vom First zur Traufe hin ansteigt. Jedoch ist die vorliegende Erfindung auf eine entsprechende Ausgestaltung der Überlappung nicht begrenzt. Auch eine stufenförmige oder runde Ausgestaltung der Überlappung ist möglich.

Bei einer Ausgestaltung der Unterlappung und der Überlappung als jeweilige schiefe Ebenen ist der Winkel der schiefen Ebenen vorzugsweise so gewählt, dass bei einer Montage auf einem Dach, das eine vorbestimmte Dachschräge mit vorbestimmten Neigungswinkel aufweist, die schiefen Ebenen der Überlappung und Unterlappung zu der Oberseite bzw. Sichtfläche der jeweiligen Dachplatten solch einen Winkel aufweisen, dass zwischen Unterlappung und Überlappung eingedrungenes Wasser durch die Schwerkraft nicht zum Dach hin sondern vom Dach weg fließt. D. h., dass bei einer Seitenansicht die schiefen Ebenen höchstens horizontal, d. h. senkrecht zur Schwerkraftrichtung ausgerichtet sind.

Bekanntermaßen fällt dabei ein Dach vom First zur Traufe hin ab, so dass auf das Dach fallendes Regenwasser in der Regel im Bereich der Traufe über eine Dachrinne abfließen kann. Die Traufe eines Daches hingegen ist der tiefste Punkt eines Daches. Folglich rinnt auf ein Schrägdach fallender Regen vom First zur Traufe hin.

Die Unterlappung kann an die Sichtfläche bzw. an die Oberseite angrenzen, und die Überlappung kann beispielsweise unterhalb der Sichtfläche bzw. der Oberseite angeordnet sein.

Die erste Halteeinrichtung kann beispielsweise eine Einrasteinrichtung wie beispielsweise eine Querrippe sein. Jedoch ist die vorliegende Erfindung nicht auf eine Einrasteinrichtung wie beispielsweise ein Schnapphaken bzw. eine Querrippe als erste Halteeinrichtung beschränkt. Die erste Halteeinrichtung kann beispielsweise auch eine Einbuchtung wie beispielsweise eine Fügenut sein.

Die zweite Halteeinrichtung kann beispielsweise eine Einbuchtung wie beispielsweise eine Fügenut sein. Jedoch ist die vorliegende Erfindung nicht hierauf begrenzt. Die zweite Halteeinrichtung kann auch eine Einrasteinrichtung wie beispielsweise eine Querrippe oder ein Schnapphaken sein.

Eine erste Halteeinrichtung einer ersten Dachplatte wechselwirkt mit einer zweiten Halteeinrichtung einer zweiten Dachplatte, wobei die Dachplatten über ihre Über- und Unterlappung in ihrer Anbaurichtung, üblicherweise in Falllinie miteinander verkettet sind. In dem beschriebenen Fall greift die erste Halteeinrichtung der ersten Dachplatte in die zweite Halteeinrichtung der zweiten Dachplatte ein usw.. Die Querrippe der ersten Dachplatte greift also in die Fügenut der zweiten Dachplatte ein.

Wie oben beschrieben, ist die vorliegende Erfindung jedoch nicht auf eine soeben beschriebene Ausführung der ersten und der zweiten Halteeinrichtungen beschränkt. Beispielsweise kann die erste Halteeinrichtung durch Stifte auf der Unterlappung realisiert sein. Diese Stifte greifen dann in Vertiefungen einer firstseitig angeordneten Dachplatte ein, wobei die Vertiefungen in der Überlappung der firstseitigen Dachplatte als zweite Halteeinrichtung fungieren. Die zweite Halteeinrichtung hat dann folglich die Form von Vertiefungen in der Unterlappung.

Auch kann die erste Halteeinrichtung in Form von Vertiefungen in der Unterlappung realisiert sein. In diese Vertiefungen greifen dann Stifte bzw. Vorsprünge einer firstseitig angeordneten Dachplatte ein. Die Stifte bzw. Vorsprünge der entsprechenden firstseitigen Dachplatte bilden dann folglich die zweite Halteeinrichtung. Die ersten und zweiten Halteeinrichtungen könen auch in Form von ineinander greifenden formschlüssigen Konturen realisiert sein.

In den oben beschriebenen Ausgestaltungen der ersten und der zweiten Halteeinrichtungen greifen diese entsprechend ineinander. Jedoch ist die vorliegende Erfindung nicht hierauf beschränkt. Auch ein Hintergreifen der ersten und der zweiten Halteeinrichtung ist möglich.

Die auf der Unterseite der Dachplatte angeordnete Abstützeinrichtung kann unterschiedlich ausgestaltet sein. So kann diese Abstützeinrichtung beispielsweise durch kantenseitig angeordnete Nuten in der Dachplatte realisiert sein , wobei diese Nuten auf einer entsprechenden Trägervorrichtung aufliegen können. Weiterhin ist es möglich, dass die Abstützeinrichtung beispielsweise durch kantenseitig angeordnete Vorsprünge in der Dachplatte realisiert ist, wobei diese Vorsprünge auf einer entsprechenden Trägervorrichtung aufliegen können. Weiterhin kann die beschriebene Abstützeinrichtung Füße umfassen, die unterhalb der Dachplatte angeordnet sind. Diese Füße können vorzugsweise kantenseitig der Dachplatte angeordnet sein. Jedoch können die Füße, die als die Abstützeinrichtung fungieren, auch zentrumsnah unter der Dachplatte angeordnet sein. Als Abstützeinrichtung kann aber auch einfach die Unterseite der Dachplatte dienen. Die Dachplatte liegt dann mittels ihrer Unterseite auf einem Dach bzw. auf einer Unterkonstruktion auf. Die Unterseite der Dachplatte kann auch auf einem entsprechenden Trägersystem bzw. auf einer entsprechenden Trägervorrichtung aufliegen.

Die Abstützeinrichtung und/oder die Unterseite der Dachplatte weist einen sich vom firstseitigen Ende aus über eine Teillänge der Dachplatte erstreckenden Abschnitt auf, in welchem ein Freiraum im Abstand zur Montagefläche gebildet ist. Dieser Freiraum dient dazu, dass die Dachplatte traufenseitig angehoben und somit verkippt werden kann. Der Freiraum kann unterschiedlich ausgestaltet sein. So kann der Freiraum beispielsweise durch eine Schräge gebildet sein, die sich von der Montagefläche hin zur Oberseite der Dachplatte erstreckt. In einer entsprechenden Ausgestaltung der Abstützteinrichtung kann die Dachplatte von einer Trägervorrichtung, auf der die Dachplatte aufliegt, abgekippt werden, indem die Dachplatte traufenseitig angehoben wird, so dass die Abstützeinrichtung in dem oben beschriebenen Freiraum auf der Trägervorrichtung aufliegt.

Der Freiraum unterhalb der Dachplatte kann aber auch durch eine Stufe in der Abstützeinrichtung gebildet sein, die zur Sichtfläche bzw. zur Oberseite der Dachplatte hin gerichtet ist. Bei einem traufenseitigen Anheben der Dachplatte kommt dann die Dachplatte am firstseitigen Ende des Freiraums in Kontakt mit der Trägervorrichtung, auf der die Dachplatte aufliegt.

Der vorstehend erwähnte Abschnitt kann sich wie erwähnt in einer Teillänge vom firstseitigen Ende der Dachplatte aus zur gegenüberliegenden Seite erstrecken, und zwar mit einer Länge, die beispielsweise mehr als 1% und insbesondere mehr als 2%, 3%, 4% oder 5% der Länge der Dachplatte (gemessen in Neigungsrichtung, also von ihrem firstseitigen zu ihrem traufenseitigen Ende) entspricht. Die Länge kann aber bevorzugt auch weniger als 20% der Dachplatte in ihrer vorstehend genannten Längsrichtung entsprechen, insbesondere weniger als 15%, 12%, 10%, 9%, 8%, 7%, 6%, 5%, 4%, 3% oder zumindest 2%.

Die oben beschriebenen Ausgestaltungen des Freiraums unterhalb der Dachplatte sind jedoch nicht auf bestimmte Ausführungsformen beschränkt, wie sie im Rahmen der vorliegenden Erfindung beschrieben werden. Der Verlauf der Abstützeinrichtung in dem sich vom firstseitigen Ende aus über die Teillänge der Dachplatte erstreckenden Abschnitt kann jede beliebige Form aufweisen, solange ein firstseitiges Auskippen der Dachplatte möglich ist. Folglich muss bei einem Aufliegen einer sich in einem Verbund von Dachplatten befindliche Dachplatte der Abschnitt der Abstützeinrichtung und/oder der Unterseite der Dachplatte, der sich vom firstseitigen Ende aus über eine Teillänge der Dachplatte erstreckt, sich oberhalb der Trägervorrichtung befinden, auf der die Abstützeinrichtung der Dachplatte aufliegt. So kann der Verlauf der Abstützeinrichtung in dem oben beschriebenen Abschnitt beispielsweise auch rund sein, so dass die Dachplatte über diesen runden Abschnitt traufenseitig auskippbar ist. Durch das Auskippen einer Dachplatte lösen sich die ersten und zweiten Halteeinrichtungen der ausgekippten Dachplatte von firstseitig und traufenseitig angeordneten Dachplatten. Eine erfindungsgemäße Dachplatte lässt sich somit aus einem Verbund von Dachplatten traufenseitig herauskippen, ohne dass die benachbarten Dachplatten, seien es die traufenseitigen Dachplatten oder seien es die firstseitigen Dachplatten oder seien es die benachbarten traufenseitig angeordnete Dachplatte (links- und rechtsseitig der auszukippenden Dachplatte) demontiert bzw. von der Unterkonstruktion gelöst werden müssen.

Durch das flächige Aufliegen einer Überlappung auf einer entsprechenden Unterlappung einer traufenseitig angeordneten anderen Dachplatte wird dem Eindringen von Wind und Wasser entgegengewirkt. Somit ist ein mittels den erfindungsgemäßen Dachplatten eingedecktes Dach wasser- und winddicht und stellt somit eine stabile Abdeckung eines Daches dar. Dabei kann mit der erfindungsgemäßen Dachplatte eine vollflächige Abdichtung eines Daches vor allem mit den nachfolgend noch erörterten Auflage- und Montageprofilen realisiert werden, so dass auf die Verwendung herkömmlicher Dachziegel verzichtet werden kann. Mit anderen Worten können die erfindungsgemäßen Dachplatten unter Verzicht herkömmlicher Dachziegel direkt an die Dachkonstruktion heran gezogen werden. Dabei kann die erfindungsgemäße Dachplatte beispielsweise eine viereckige Grundform aufweisen. Jedoch ist die vorliegende Erfindung nicht hierauf begrenzt. Auch eine beispielsweise sechseckige oder eine achteckige Ausgestaltung einer erfindungsgemäßen Dachplatte ist möglich.

Die oben beschriebene Dachplatte kann ferner eine erste Vertiefung aufweisen, die firstseitig der Sichtfläche bzw. Oberseite der Dachplatte im Bereich der Unterlappung angeordnet ist.

Vorzugsweise kann die erste Vertiefung zwischen der Unterlappung und der ersten Halteeinrichtung angeordnet sein - also traufenseitig zur ersten Halteeinrichtung und firstseitig der Unterlappung. Die erste Vertiefung kann auch als eine Querrinne bezeichnet werden. Die erste Vertiefung und auch die erste Halteeinrichtung können eine kleinere Breite aufweisen als die Breite der Dachplatte, so dass in die erste Vertiefung gelangtes Wasser hin zur Unterseite der Dachplatte abgeleitet werden kann. Dabei ist unter dem Begriff "Breite" jene Breite der Dachplatte bzw. der Halteeinrichtung zu verstehen, die quer zur First-TraufenRichtung verläuft, also in der Regel quer zur Falllinie, also der Neigungsrichtung des Daches. Das zur Unterseite der Dachplatte hin abgeleitete Wasser kann beispielsweise durch ein unterhalb des Dachplattensystems bzw. unterhalb der Dachplatte angeordnetes Trägerprofil bzw. Trägervorrichtung hin zur Traufe des Daches abgeleitet werden.

Die erste Vertiefung, die firstseitig der Sichtfläche der Oberseite im Bereich der Unterlappung angeordnet ist, gewährleistet somit, dass kein Wasser unter das eingedeckte Dach gerät.

Die oben beschriebenen Dachplatten können ferner eine in der Überlappung angeordnete zweite Vertiefung aufweisen.

Die zweite Vertiefung kann vorzugsweise traufenseitig der zweiten Halteeinrichtung angeordnet sein. In der zweiten Vertiefung kann eine Dichtung angeordnet sein, so dass in den Zwischenraum zwischen Unterlappung und Überlappung eventuell eingedrungenes Wasser davon abgehalten wird, tiefer in den Spalt zwischen Unterlappung und Überlappung einzudringen.

Die oben beschriebenen Dachplatten können ferner kantenseitig (also an den in der Regel parallel zueinander verlaufenden und bei entsprechender Ausrichtung und Montage der Dachplatten in Neigungsrichtung ausgerichteten seitlichen Längskaten der Dachplatte) angeordnete durchgehende dritte Vertiefungen auf der Sichtfläche bzw. Oberseite der Dachplatte umfassen.

Diese dritten Vertiefungen können auch als Dichtnuten bezeichnet werden. Die dritten Vertiefungen bzw. Dichtnuten dienen der Aufnahme eines Dichtprofils, durch das dem Eindringen von Wasser zwischen zwei kantenseitig benachbarten Dachplatten entgegengewirkt wird.

Die oben beschriebenen Dachplatten können ferner kantenseitig angeordnete durchgehende vierte Vertiefungen umfassen, die unterhalb der Sichtfläche bzw. Oberseite auf einer Flanke der Dachplatte angeordnet ist.

Diese vierten Vertiefungen können auch als seitliche Dichtnuten bezeichnet werden. Auch diese vierten Vertiefungen bzw. seitlichen Dichtnuten dienen der Aufnahme eines Dichtprofils, durch das ein Eindringen von Wasser zwischen zwei kantenseitig benachbarten Dachplatten entgegengewirkt wird. Ein in den vierten Vertiefungen aufgenommenes Dichtprofil kann auch in die oben beschriebenen dritten Vertiefungen eingreifen, so dass ein entsprechendes Dichtprofil bzw. eine entsprechende Dichtung sowohl die dritten Vertiefungen als auch die vierten Vertiefungen abdichtet, wodurch einem Eindringen von Wasser zwischen zwei kantenseitig benachbarten Dachplatten entgegengewirkt wird.

Die oben beschriebenen Dachplatten können ferner eine Dachplatten-Halteeinrichtung umfassen, die unterhalb der Sichtfläche oder Oberseite der Dachplatte angeordnet ist. Dabei kann die Dachplatten-Halteeinrichtung beispielsweise in Form von Schnapphaken realisiert sein.

Die Dachplatten-Halteeinrichtung dient einer Halterung einer Dachplatte an der unterhalb der Dachplatte angeordneten Unterkonstruktion bzw. an der unterhalb einer Dachplatte angeordneten Trägervorrichtung. Die Dachplatten-Halteeinrichtung kann vorzugsweise kantenseitig unterhalb der Sichtfläche angeordnet sein. Dabei kann die Dachplatten-Halteeinrichtung entweder lediglich an einer Kante oder an beiden Kanten der Dachplatte angeordnet sein. Die Dachplatten-Halteeinrichtung kann beispielsweise durch Halteklammern realisiert sein, die beispielsweise in Haltenuten von Stegen eines unterhalb der Dachplatte angeordneten Trägerprofils eingreifen. Jedoch ist die vorliegende Erfindung nicht auf Halteklammern als Dachplattenhalteeinrichtung beschränkt. Jede beliebige Einrichtung, die geeignet ist zum Halten bzw. Fixieren der Dachplatte an einer unter der Dachplatte angeordneten Trägereinheit kann für die Dachplatten-Halteeinrichtung verwendet werden. Die Dachplatten-Halteeinrichtung ist vorzugsweise am traufenseitigen Ende der Dachplatte angeordnet, so dass durch ein Herauskippen der Dachplatte die Halterung zwischen der Dachplatten-Halteeinrichtung und dem unterhalb der Dachplatte angeordneten Trägerprofil, in das die Dachplatten-Halteeinrichtung eingreift, gelöst wird.

Jedoch kann die Dachplatten-Halteeinrichtung an jeder Position unterhalb der Sichtfläche angeordnet sein. Auch mehrere Dachplatten-Halteeinrichtungen können an jeder Kante angeordnet sein. So können beispielsweise an jeder Kante drei Dachplatten-Halteeinrichtungen am traufenseitigen Ende, mittig und am firstseitigen Ende angeordnet sein.

Die oben beschriebenen Dachplatten können ferner eine erste Wandung umfassen, die sich traufenseitig an die Sichtfläche oder Oberseite der Dachplatte anschließt und sich von der Sichtfläche oder Oberfläche weg gewandt traufenseitig nach unten erstreckt.

Diese erste Wandung kann auch als eine Traufenwandung bezeichnet werden und wirkt einem Eindringen von Wasser und Wind von der Traufe in den Dachunterraum entgegen. Des Weiteren hat die erste Wandung bzw. die Traufenwandung die Funktion, in Richtung Traufe ablaufendes Wasser beispielsweise in eine Dachrinne abzuführen. Dachplatten, die die oben beschriebene erste Wandung bzw. die oben beschriebene Traufenwandung umfassen, werden üblicherweise am traufenseitigen Ende eines Daches verbaut.

Die oben beschriebenen Dachplatten können ferner eine zweite Wandung umfassen, die sich kantenseitig an die Sichtfläche oder Oberseite anschließt und sich von der Sichtfläche oder Oberseite weg gewandt kantenseitig nach unten erstreckt.

Diese zweite Wandung wird auch als Ortgangwandung bezeichnet und wirkt einem Eindringen von Wasser und Wind von der Seite in den Dachunterraum entgegen. Des weiteren werden Windbretter und der First vor Feuchtigkeit durch eine Dachplatte mit einer zweiten Wandung bzw. Ortgangwandung geschützt. Dachplatten mit der oben beschriebenen zweiten Wandung bzw. Ortgangwandung bilden üblicherweise den seitlichen Abschluss eines Daches. Neben der zweiten Wandung kann eine erfindungsgemäße Dachplatte auch oben beschriebene erste Wandung bzw. Traufenwandung umfassen. So kann beispielsweise eine am unteren Rand eines Dachs angeordnete Dachplatte sowohl eine erste als auch eine zweite Wandung umfassen.

Die oben beschriebenen Dachplatten können ferner eine dritte Wandung umfassen, die sich firstseitig an die Sichtfläche oder Oberseite anschließt und sich von der Sichtfläche oder Oberseite weg gewandt firstseitig nach oben erstreckt.

Diese dritte Wandung kann auch als eine Firstwandung bezeichnet werden und wirkt einem Eindringen von Wasser und Wind in den First entgegen. Eine erfindungsgemäße Dachplatte kann neben dieser dritten Wandung bzw. Firstwandung auch oben beschriebene erste Wandung bzw. Traufenwandung und/oder zweite Wandung bzw. Ortgangwandung umfassen.

Die oben beschriebenen Dachplatten können ferner eine Aussparung umfassen, die in der Sichtfläche oder Oberseite der Dachplatte angeordnet ist.

In dieser Aussparung können beispielsweise verschiedenfarbige flächige Elemente eingelassen sein, so dass das Erscheinungsbild eines mit den erfindungsgemäßen Dachplatten eingedeckten Daches beliebig variierbar und beispielsweise einem Rest eines Hauses angepasst werden kann.

Die oben beschriebenen Dachplatten können ferner ein Photovoltaikelement umfassen, das auf der Sichtfläche oder Oberseite oder in der Aussparung angeordnet ist.

Das oben beschriebene Photovoltaikelement kann beispielsweise ein Photovoltaiklaminat sein. Eine Dachplatte, die ein oben beschriebenes Photovoltaikelement umfasst, kann auf deren Unterseite beispielsweise eine Aussparung bzw. eine Tasche für Anschlüsse des Photovoltaikelements umfassen.

Eine oben beschriebene Dachplatte, die ein Photovoltaikelement umfasst, vereinigt sowohl die Funktion einer Stromerzeugung als auch die Funktion einer Dacheindeckung. Eine Dacheindeckung mit oben beschriebenen Dachplatten, die Photovoltaikelemente umfassen, bietet dahingehend einen Vorteil, dass ein Dach, dessen Fläche zur Stromerzeugung genutzt werden soll, mittels den erfindungsgemäßen Dachplatten wie ein gewöhnliches Dach bedeckt werden kann, ohne dass auf diese Dachkonstruktion erneut Photovoltaik-Paneele aufzubringen sind, um Strom mittels Sonnenstrahlung zu erzeugen.

Bei Ausfall eines Photovoltaikelements, das in einer erfindungsgemäßen Dachplatte enthalten ist, kann die entsprechende Dachplatte wie oben beschrieben ohne Probleme aus dem Dachplattenverbund herausgekippt werden, ohne dass die benachbarten Dachplatten, die jeweils Photovoltaikelemente umfassen können, aus der Dachkonstruktion herauszulösen sind.

Die oben beschriebenen Dachplatten, die Photovoltaikelemente umfassen, können auch mit erfindungsgemäßen Dachplatten im Rahmen eines Dacheindeckungssystems kombiniert werden, die keine Photovoltaikelemente umfassen. Da die Größe der erfindungsgemäßen Dachplatten kleiner gestaltet sein kann als die Größe von üblicherweise auf Häuserdächern verbauten Photovoltaikpaneele, kann ein mittels den erfinderischen Dachplatten eingedecktes Dach, die jeweils Photovoltaikelemente umfassen, besser den jeweiligen Bedürfnissen eines Hausbauers angepasst werden. Auch aus ästhetischen Gesichtspunkten ist ein Dach, dass mit den erfindungsgemäßen Dachplatten, die Photovoltaikelemente umfassen, eingedeckt ist, ansprechender im Vergleich zu einem herkömmlichen Dach, auf dem herkömmliche Photovoltaikpaneele aufgebracht sind. Auch hinsichtlich des Arbeitsaufwandes zum Eindecken eines Dachs mit erfindungsgemäßen Dachplatten, die jeweils Photovoltaikelemente umfassen, ist das Eindecken eines Dachs mit erfindungsgemäßen Dachplatten weniger arbeitsintensiv und arbeitsaufwändig als das Eindecken eines Dachs mit herkömmlichen Dachziegeln und ein anschließendes Aufbringen einer Photovoltaikanlage auf diesem fertig eingedeckten Dach.

Die oben beschriebenen Dachplatten können ferner auf deren Unterseite eine Rippenkonstruktion aufweisen.

Diese Rippenkonstruktion befindet sich also auf der Unterseite der Dachplatte. Die Rippenkonstruktion kann aus Längs- und/oder Querrippen bestehen, oder kann beispielsweise eine wabenförmige Rippenkonstruktion sein. Die Rippenkonstruktion dient der Steigerung der Stabilität der Dachplatte unter gleichzeitiger Minimierung des Gewichts der Dachplatte. Wenn eine Dachplatte ein oben beschriebenes Photovoltaikelement auf deren Sichtfläche oder Oberseite umfasst, und unterhalb des Photovoltaikelements eine Rippenkonstruktion vorgesehen ist, dann dient die unterhalb des Photovoltaikelements angeordnete Rippenstruktur auch der Bereitstellung einer Kühlung für das Photovoltaikelement. Da der Wirkungsgrad eines Photovoltaikelements mit steigender Temperatur abnimmt, kann durch die Bereitstellung von Kühlung für das Photovoltaikelement durch die Rippenkonstruktion auf der Unterseite der Dachplatte eine Steigerung des Wirkungsgrads des Photovoltaikelements bereitgestellt werden.

Die oben beschriebenen Dachplatten können aus unterschiedlichsten Materialien gebildet werden. So können die oben beschriebenen Dachplatten beispielsweise aus Kunststoff gefertigt sein. Jedoch ist die vorliegende Erfindung nicht hierauf beschränkt. Auch können die oben beschriebenen Dachplatten aus einem Metall wie beispielsweise Aluminium, Kupfer, Zink usw. gebildet sein.

Die vorliegende Erfindung offenbart auch ein Dacheindeckungssystem, das mindestens eine erste oben beschriebene Dachplatte und eine zweite oben beschriebene Dachplatte umfasst, wobei die Überlappung der zweiten Dachplatte die Unterlappung der ersten Dachplatte überlappt, und wobei die erste Halteeinrichtung der ersten Dachplatte und die zweite Halteeinrichtung der zweiten Dachplatte ineinander greifen oder einander hintergreifen, so dass die erste und die zweite Dachplatte miteinander verbunden sind. Weiterhin umfasst das erfindungsgemäße Dacheindeckungssystem mindestens eine Trägervorrichtung, nämlich so genannte Auflage- oder Montageprofile, auf der die Abstützeinrichtungen der ersten und der zweiten Dachplatte abstützbar sind, so dass die Montagefläche auf der Trägervorrichtung aufliegt, wobei die erste Dachplatte traufenseitig von der Trägervorrichtung dadurch auskippbar ist, dass der sich über die Teillänge der Dachplatte erstreckende Abschnitt der Abstützeinrichtung auf der Trägervorrichtung zum Aufliegen kommt, wobei durch das Auskippen die Verbindung zwischen der ersten Dachplatte und zweiten Dachplatte lösbar ist. Das heißt, die Ineinandergreifung oder die Hintergreifung der ersten Halteeinrichtung der ersten Dachplatte und zweiten Halteeinrichtung der zweiten Dachplatte wird gelöst.

Die Trägervorrichtung kann einstückig, zweistückig oder mehrstückig ausgebildet sein. Die Auskippbarkeit wird dadurch erreicht, dass der sich über die Teillänge der Dachplatte erstreckende Abschnitt der Abstützeinrichtung auf der Trägervorrichtung zum Aufliegen kommt, so dass der verbleibende Abschnitt der Abstützeinrichtung und somit die Dachplatte sich von der Trägervorrichtung vom Dach weg löst. Dabei kann das Lösen bzw. das Auskippen der Dachplatte von der Trägervorrichtung erfolgen, ohne dass die der auszukippenden bzw. zu lösenden Dachplatte benachbarten Dachplatten von der Trägervorrichtung gelöst bzw. angehoben werden müssen.

Kantenseitig benachbarte Dachplatten, also die in der Regel in horizontalrichtung nebeneinander liegenden Dachplatten, können voneinander beabstandet sein, so dass ein entsprechender Spalt zwischen den Dachplatten beispielsweise thermisch bedingte Größenänderungen kompensieren kann.

Bei dem oben beschriebenen Dacheindeckungssystem kann die Trägervorrichtung ein Montageprofil mit einer Grundfläche und mit zwei voneinander beabstandeten Stegen sein, wobei die Abstützeinrichtungen auf den Stegen abstützbar sind.

Im Fall von kleineren Breiten der oben beschriebenen ersten Vertiefung und ersten Halteeinrichtung im Vergleich zur Breite der Dachplatte kann in die erste Vertiefung eingedrungenes Wasser in den Zwischenraum zwischen die Stege abgeleitet werden, so dass zwischen die Stege der Trägervorrichtung eingeleitetes Wasser zur Traufe über das Montage- oder Trägerprofil ablaufen kann.

In den oben beschriebenen Dacheindeckungssystemen kann zwischen zwei kantenseitig benachbarten Dachplatten traufenseitig eine Öffnung gebildet sein, in die ein Abstandshalter einbringbar ist.

Dieser Abstandshalter kann auch als ein Druckquader bezeichnet werden. Der Abstandshalter bzw. der Druckquader dient der Erhöhung der mechanischen Sicherheit der Dachplatten. Durch eine Klemmung des Abstandshalters durch die den Abstandshalter umgebenden Dachplatten werden die Dachplatten vor einem Ausheben durch beispielsweise einen Windsog gesichert. Weiterhin wirken die Abstandshalter einem Übereinanderschieben der Dachplatten entgegen, wenn die Dachplatten beispielsweise durch eine Person begangen werden.

Der Abstandshalter gewährleistet weiterhin einen Formschluss der ersten Halteeinrichtung und der zweiten Halteeinrichtung von benachbarten Dachplatten, so dass zwischen einer Unterlappung und einer entsprechenden Überlappung eingedrungenes Wasser nicht an den Kontaktpunkt zwischen erster und zweiter Halteeinrichtung vorbeifließen und in den Dachzwischenraum eindringen kann.

Der Abstandshalter wird nachträglich von oben zwischen vier benachbarte Dachplatten eingebracht. Diese Öffnung ermöglicht es, dass der Abstandshalter eingebaut werden kann, wenn die Dachplatten bereits montiert sind. Des weiteren kann der Abstandshalter im Falle einer Demontage durch die selbe Öffnung entfernt werden, und die Demontage einer einzelnen Dachplatte wird wieder ermöglicht.

Weitere Vorteile und Ausgestaltungen einer erfindungsgemäßen Dachplatte und eines erfindungsgemäßen Dacheindeckungssystems werden aus der nachfolgenden Beschreibung von in den Figuren schematisch gezeigten Ausführungsbeispielen ersichtlich. Die Zeichnungen zeigen:
- Figur 1:: eine isometrische Darstellung einer erfin- dungsgemäßen Dachplatte;
- Figur 2:: eine Draufsicht auf die Unterseite einer erfindungsgemäßen Dachplatte;
- Figur 3:: eine Seitenansicht einer erfindungsgemäßen Dachplatte;
- Figur 4A:: eine Draufsicht auf die Oberseite einer erfindungsgemäßen Dachplatte;
- Figur 4B:: einen Querschnitt entlang der Ebene A-A der in Figur 4A gezeigten Dachplatte;
- Figur 5A:: eine Seitenansicht einer erfindungsgemäßen Dachplatte entlang der Blickrichtung First-Traufe;
- Figur 5B:: eine Vergrößerung des umrundeten Abschnitts der erfindungsgemäßen Dachplatte aus Figur 5A;
- Figur 6:: eine Seitenansicht einer erfindungsgemäßen Dachplatte entlang der Blickrichtung Traufe-First;
- Figuren 7A: Schnittansichten einer Auskippprozedur
- bis 7D:: bzw. eines Auskippvorganges einer Dachplatte aus einem Verbund von Dachplatten;
- Figur 8:: eine isometrische Darstellung einer bevorzugten Ausgestaltung einer erfindungsgemäßen Dachplatte;
- Figur 9:: eine isometrische Darstellung einer weiteren bevorzugten Ausgestaltung einer erfindungsgemäßen Dachplatte;
- Figur 10:: ein erfindungsgemäßes Dacheindeckungssystem umfassend zwei erfindungsgemäße Dachplatten und zwei erfindungsgemäße Trägervorrichtungen;
- Figur 11A:: eine Seitenansicht zweier erfindungsgemäßer verbundener Dachplatten;
- Figur 11B:: eine Vergrößerung des umrandeten Abschnitts des in Figur 11A gezeigten Verbunds von Dachplatten;
- Figur 12:: eine isometrische Darstellung von vier erfindungsgemäßen Dachplatten, die miteinander verbunden sind.

In der folgenden Beschreibung bezeichnen gleiche Bezugszeichen gleiche Merkmale bzw. gleiche Bauelemente, so dass wiederholende Beschreibungen von bereits erläuterten Bauelementen bzw. Merkmalen vermieden werden.

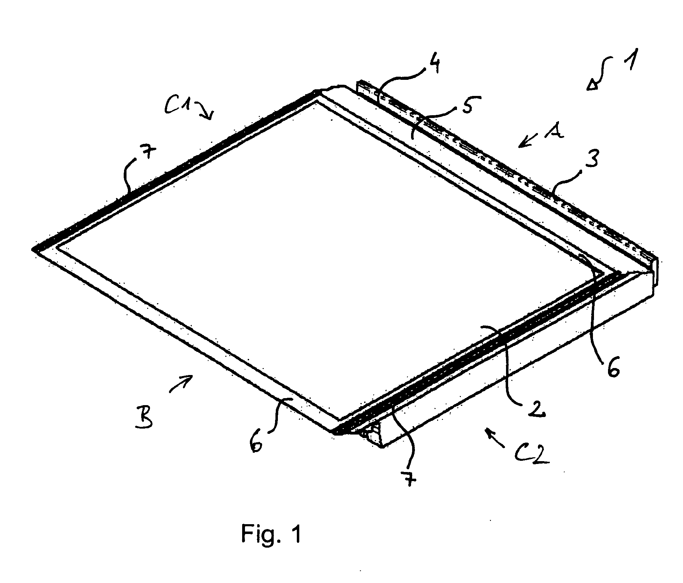

Die Figuren 1 bis 6 zeigen unterschiedliche Ansichten einer erfindungsgemäßen Dachplatte 1.

Die in den Zeichnungen dargestellte Dachplatte dient dabei insbesondere zur Aufnahme von Photovoltaikelementen 2 an ihrer Sichtfläche oder Oberseite 6, so dass mit der erfindungsgemäßen Dachplatte möglichst ein komplettes Dach realisiert werden kann, bei der die Dachfläche maximal durch die mit den Photovoltaikelementen ausgestatteten Dachplatten gebildet ist. Lediglich auf der Schatten oder beispielsweise Nordseite eines Daches oder bei spezifischen Dachkonstruktionen mit schräg verlaufenden Randabschnitten können so genannte Dummies eingesetzt werden, d.h. ebenfalls Dachplatten oder zugeschnittene Dachplatten, die allerdings an ihrer Sichtfläche oder Oberseite 6 keine Photovoltaikelemente 2 aufweisen. Ansonsten soll ein betreffendes Photovoltaikelement die Oberseite der Sichtfläche 6 möglichst optimal ausnützen, um so viel Sonnenenergie wie möglich in Strom umwandeln zu können.

Auch wenn die mit Photovoltaikelmenten 2 augestatteten Dachplatten die wesentliche Realisierungsform der erfindungsgemäßen Dachplatte ist, wird nachfolgend lediglich von Dachplatten gesprochen. Die nachfolgend im Detail weiter erörterten Dachplatten sind in der Regel rechteckförmig oder quadratisch gebildet, und werden in der Regel von der Traufe zum First, also der Neigung des Daches folgend von unten nach oben entgegen Fallrichtung verlegt. In dieser Fall- oder Neigungsrichtung sind jeweils aufeinander folgende Dachplatten miteinander verkettet. Die bei der Verlegung jeweils höher liegende Begrenzungsseite der Dachplatte wird dabei als firstseitige Begrenzung und die dem gegenüber in der Falllinie niedrigere Linienseite wird als traufenseitige Begrenzung bezeichnet. Diese sind in der Regel parallel verlaufend ausgestaltet, können aber ähnlich einem Dachziegel beispielsweise auch auf der firstseitigen Begrenzung eine konkave Begrenzungskante und auf der traufenseite eine konvexe Begrenzungskante aufweisen (oder eine firstseitige trapezförmige Ausnehmung und ein traufenseitiger trapezförmiger Vorsprung), dass der traufenseitige trapezförmige oder beispielsweise konvexe Vorsprung immer in die entsprechende firstseitige Ausnehmung einer nächst folgenden tieferen Platte eingepasst werden kann. Hier sind Abwandlungen denkbar.

Die firstseitige Begrenzung wird nachfolgend teilweise auch mit A, die traufenseitige Begrenzung mit B und die dazu in der Regel senkrecht verlaufenden, also um 90° gedrehten seitlichen Begrenzungslinien oder -kanten mit C1 oder C2 bezeichnet. Werden die Dachplatten entsprechend verlegt, liegen diese seitlichen Begrenzungskanten C1, C2 in horizontaler Richtung versetzt, verlaufen also in der Regel in der Falllinie parallel zur Falllinie eines so konzipierten Daches.

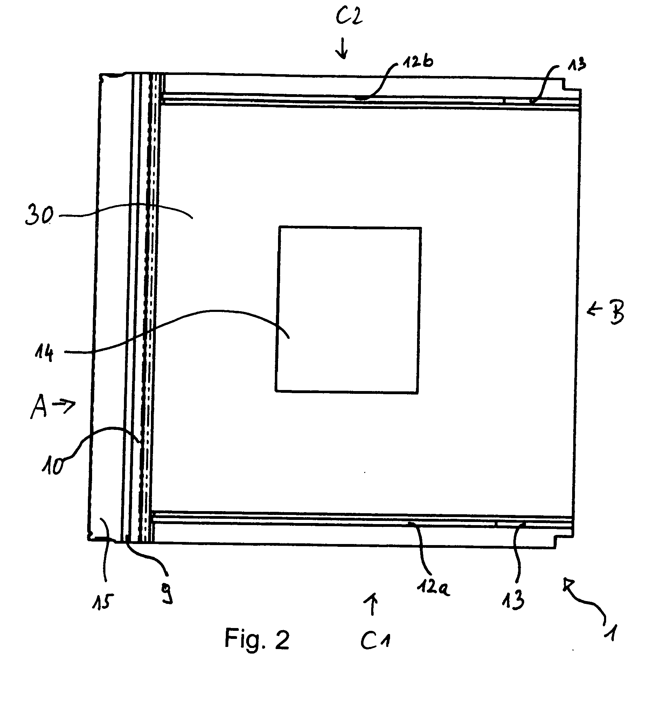

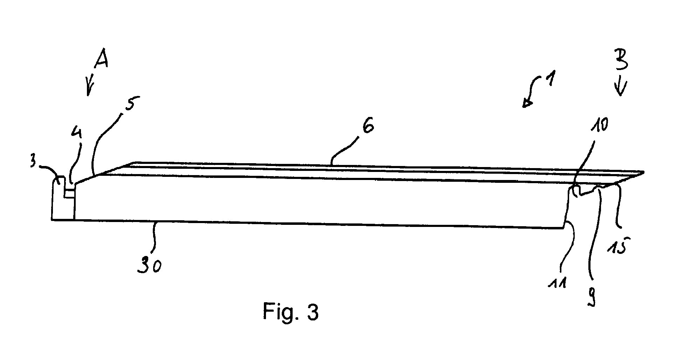

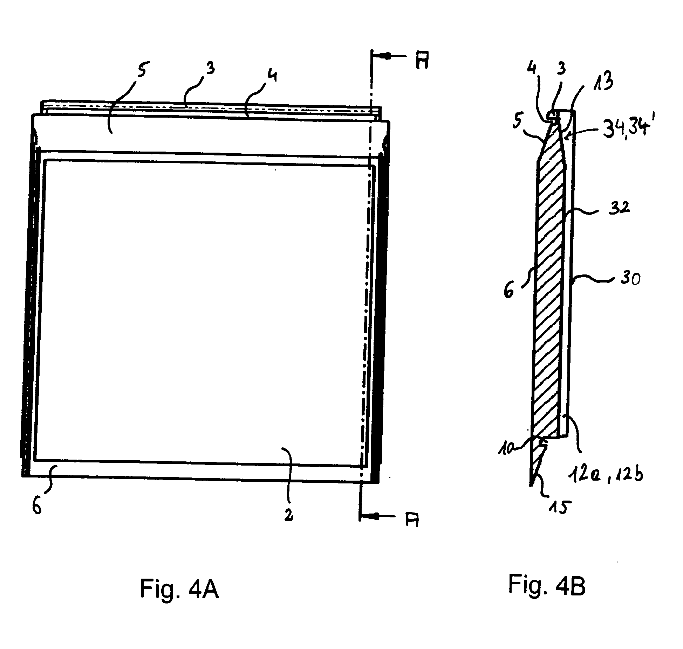

Figur 1 zeigt also eine isometrische Darstellung einer erfindungsgemäßen Dachplatte 1. Die erfindungsgemäße Dachplatte 1 umfasst dabei die bereits erwähnte Sichtfläche oder Oberseite 6, eine in Figur 2 gezeigte und zur Sichtfläche oder Oberseite 6 gegenüberliegende Unterseite 30, eine firstseitige Unterlappung 5, eine in den Figuren 2 und 3 dargestellte traufenseitige Überlappung 15, eine erste Halteeinrichtung 3 in Form einer Querrippe, die firstseitig der Unterlappung 5 angeordnet ist, eine zweite Halteeinrichtung 10 in Form einer Fügennut, die firstseitig der Überlappung 15 angeordnet ist, und eine auf der Unterseite 30 der Dachplatte 1 angeordnete Abstützeinrichtung 12a, 12b, die in den Figuren 2, 4B, 5A und 5B gezeigt ist, wobei die Abstützeinrichtung 12a, 12b eine Ausricht- und/oder Montagefläche 32 definiert, die in Figur 4B dargestellt ist. In Figur 4B ist zu sehen, dass die Abstützeinrichtung 12a, 12b der Dachplatte 1 einen sich vom firstseitigen Ende aus über eine Teillänge der Dachplatte 1 erstreckenden Abschnitt 34' aufweist, in welchem die Abstützeinrichtung 12a, 12b der Dachplatte 1 unter Ausbildung eines Freiraums 34 im Abstand zur Montagefläche 32 verläuft. Der eben beschriebene Freiraum 34 im Abstand zur Montagefläche 32 ist in Figur 4b im oberen Abschnitt der Dachplatte 1 zu sehen und ist der Bereich der Abstützeinrichtung 12a, 12b, der bei einer Montage der erfindungsgemäßen Dachplatte 1 in einem Verbund von Dachplatten 1 nicht auf einer Trägervorrichtung 16a, 16b aufliegt, sondern von dieser Trägervorrichtung bzw. von Stegen 16a, 16b der Trägervorrichtung 16 nach oben hin weg weist. Dadurch wird eine Auskippschräge 13 gebildet, die in einem spitzen Winkel gegenüber der so genannten Montagefläche 32 zum firstseitigen Ende der Dachplatte 1 ansteigt.

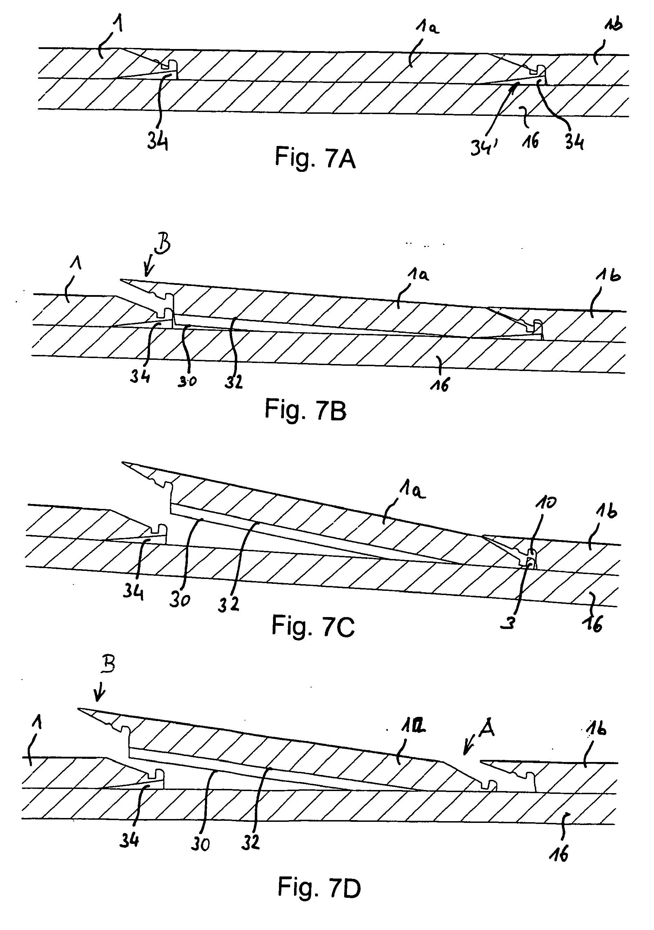

In den Figuren 7A bis 7D ist ein Auskippvorgang einer ersten Dachplatte 1a aus einem Dachplattenverbund dargestellt. Figur 7A ist eine Schnittansicht eines Dachplattenverbunds, bei dem eine Dachplatte 1a firstseitig einer Dachplatte 1 und traufenseitig einer Dachplatte 1b angeordnet ist. Die dargestellten Dachplatten 1, 1a und 1b liegen auf deren jeweiligen Abstützeinrichtungen 12a, 12b auf einer Trägervorrichtung 16 auf. An den firstseitigen Enden der Dachplatten 1 und 1a ist der erwähnte Freiraum 34 zwischen der Trägervorrichtung 16 und den jeweiligen Abstützeinrichtungen 12a, 12b gebildet. Die erste Halteeinrichtung 3 der ersten Dachplatte 1a greift in die zweite Halteeinrichtung 10 der zweiten Dachplatte 1b. Am traufenseitigen Ende der ersten Dachplatte 1a greift in die zweite Halteeinrichtung 10 der ersten Dachplatte 1a die erste Halteeinrichtung der traufenseitig angeordneten Dachplatte 1.

Figur 7B zeigt den Beginn eines Auskippvorganges der ersten Dachplatte 1a aus dem Dachplattenverbund bestehend aus den Dachplatten 1, 1a, 1b. Die erste Dachplatte 1a kann am traufenseitigen Ende beispielsweise mittels eines hier nicht dargestellten Werkzeug angehoben werden. Das hier nicht dargestellte Werkzeug kann beispielsweise kantenseitig in die Flanken der ersten Dachplatte 1a eingreifen, und über dieses Werkzeug kann die erste Dachplatte 1a angehoben werden. Durch ein Anheben des traufenseitigen Endes der ersten Dachplatte 1a kippt die erste Dachplatte 1a, so dass der Freiraum 34, der zwischen der Abstützeinrichtung 12a, 12b der ersten Dachplatte 1a und der Trägervorrichtung 16 gebildet ist, kleiner wird.

Figur 7C zeigt das Ende des Auskippvorganges. Am Ende des Auskippvorganges hat sich die erste Dachplatte 1a traufenseitig maximal von der Trägervorrichtung 16 gelöst, und die Abstützeinrichtung 12a, 12b der ersten Dachplatte 1a liegt in dem Abschnitt 34', der sich firstseitig über eine Teillänge der ersten Dachplatte 1a erstreckt, auf der Trägervorrichtung 16 auf.

Dabei hat sich die Verbindung der ersten Dachplatte 1a zu der zweiten Dachplatte 1b und zu der Dachplatte 1 gelöst. Aus den Figuren 7B und 7C ist ersichtlich, dass die erste Halteeinrichtung 3 der ersten Dachplatte 1a sich aus der zweiten Halteeinrichtung 10 der zweiten Dachplatte 1b entfernt hat - somit die Verbindung zwischen der ersten Dachplatte 1a und der zweiten Dachplatte 1b getrennt wird. Darüber hinaus entfernt sich die zweite Haltevorrichtung 10 der ersten Dachplatte 1a von der ersten Haltevorrichtung 3 der traufenseitig angeordneten Dachplatte 1 - somit ist die Verbindung zwischen der ersten Dachplatte 1a und der traufenseitigen Dachplatte 1 auch getrennt.

Figur 7D zeigt, dass die aus dem Verbund von Dachplatten herausgelöste bzw. herausgekippte erste Dachplatte 1a zur Traufe hin herausgezogen werden kann.

Die erste Dachplatte 1a kann also aus dem Verbund von Dachplatten herausgelöst bzw. herausgekippt werden, ohne dass die traufenseitige Dachplatte 1 und die firstseitige zweite Dachplatte 1b von der Trägervorrichtung 16 gelöst werden müssen.

Aus den Darstellungen gemäß Figur 7A bis 7D geht während des Auslösevorganges einer Dachplatte aus einem Verbund mit benachbarten Dachplatten hervor, dass bei Beginn der Auskippbewegung die herauszulösende Dachplatte 1a zunächst um einen Punkt oder eine Linie quer zu den Halteprofilen 16 kippt, die durch die Schnittlinie der Montagefläche 32 (also der Unterseite 30 der Dachplatte bzw. der Abstützeinrichtung 12a, 12b) und der Auskippschräge 13 gebildet ist.

Gemäß der Darstellung nach Figur 7C ist die Dachplatte einzeln nurmehr soweit angehoben, dass die Auskippschräge 13 in Parallellage zur Oberseite 16' der Montageprofile 16, also der Trägervorrichtung 16 aufliegt. Die Auskippschräge 13 weist dabei zur Montagefläche solch einen Winkel auf, dass beim Aufliegen der Auskippschräge 13 auf dem Träger- oder Montageprofil 16' die Halterungen zwischen der ersten Halteeinrichtung 3 der ersten Dachplatte 1a und der zweiten Halteeinrichtung 10 der firstseitigen Dachplatte 1b und zwischen der zweiten Halteeinrichtung 10 der ersten Dachplatte 1a und der Dachplatte 1b und der ersten Halteeinrichtung 3 der traufenseitigen Dachplatte 1 zuverlässig komplett getrennt werden. Bei Bedarf könnte die Platte sogar noch über die Position in Figur 7C weiter angehoben werden, so dass die Platte dann nur noch mit ihrem firstseitigen Ende, also am Ende der Auskippschräge 13 auf der Oberseite 16' der Montageprofile 16 aufliegen würde, um die Schiene dann wie anhand von Figur 7D gezeigt ist, heraus zu lösen.

Aus dem erläuterten Vorgang ist auch ersichtlich, dass das Entfernen der traufenseitigen Überlappung 15 der auszukippenden Dachplatte 1a von der in Figuren 7A bis 7D linksliegenden Dachplatte 1 problemlos möglich ist, da hier die traufenseitige Überlappung 15 der auszukippenden und auszuwechselnden Dachplatte 1a oben und die entsprechende Unterlappung 5 der in traufenrichtung sich anschließenden Dachplatte 1 tiefer liegt.

Nachdem wie geschildert eine möglicherweise beschädigte Dachplatte 1a entfernt wurde, kann auf umgekehrten Wege eine entsprechend neue Dachplatte eingesetzt werden, indem diese ähnlich wie in Figur 7D aufgesetzt, dann entsprechend der Darstellung gemäß 7C nach rechts verschoben wird, bis die firstseitige Unterlappung 5 dieser neu einzufügenden Dachplatte 1a unterhalb der Überlappung 15 der sich traufenseitig anschließenden benachbarten Dachplatte 1b eingeschoben ist. In dieser Position kann dann das gegenüberliegende traufenseitige Ende der Dachplatte abgesenkt werden, nämlich über die Zwischenposition gemäß Figur 7B bis hin zur Endlage gemäß Figur 7A.

Der geschilderte Vorgang zeigt also, dass im Rahmen der Erfindung es problemlos möglich ist auch bei in einem Dachverbund verlegter Dachplatten einzelne Dachplatten problemlos auszuwechseln.

Aus den Figuren 1, 3, 4A und 4B ist ersichtlich, dass die erfindungsgemäße Dachplatte 1 eine erste Vertiefung 4 aufweist, die firstseitig der Sichtfläche oder Oberseite 6 im Bereich der Unterlappung 5 angeordnet ist. Die erste Vertiefung 4 ist zwischen der Unterlappung 5 und der ersten Halteeinrichtung 3 angeordnet, ist also traufenseitig zur ersten Halteeinrichtung 3 und firstseitig der Unterlappung 5 angeordnet. Die erste Vertiefung 4 kann auch als eine Querrinne 4 bezeichnet werden. Aus den Figuren 1 und 4A ist ersichtlich, dass die erste Vertiefung 4 und die erste Halteeinrichtung 3 der Dachplatte 1 eine kleinere Breite aufweisen als die Breite der Dachplatte 1, so dass in die erste Vertiefung 4 gelangtes Wasser zu den Kanten der Dachplatte 1 hin abfließen kann. Eine später noch zu beschreibende Trägervorrichtung 16, die unterhalb der Dachplatten 1 angeordnet ist, d. h. zwischen den Dachplatten 1 und dem zu bedeckenden Dach, kann dazu dienen, dass das über die erste Vertiefung 4 abgeleitete Wasser hin zur Traufe des Daches abgeleitet wird.

Wenn wie vorstehend von Länge und Breite der Dachplatte gesprochen wird, wird mit der Bezeichnung Länge der Dachplatte die Erstreckung der Dachplatte in ihrer Verkettungsrichtung mit benachbarten Dachplatten gemeint, in der Regel also in der Neigungsrichtung oder Falllinie eines Daches folgend. Mit Breite ist die Erstreckung quer dazu gemeint, bei üblicher Verlegung der Dachplatte also in Horizontalrichtung. Dabei kann die Länge der Dachplatte und die Breite der Dachplatte gleich dimensioniert sein. Möglich ist es aber ebenso, dass die Erstreckung der Dachplatte in so genannter Längsrichtung größer ist als in Breiten- oder Querrichtung oder umgekehrt. Einschränkungen sind damit nicht impliziert.

Die erste Vertiefung 4 dient somit dem Ableiten von Wasser, das zwischen die Unterlappung 5 einer traufenseitig angeordneten Dachplatte 1 und Überlappung 15 einer firstseitigen Dachplatte 1 eingedrungen ist, hin zur Traufe des Daches.

Dabei verläuft die erwähnte Vertiefung 4 und die erste Halteeinrichtung 3 gerade und quer, insbesondere senkrecht zur Längserstreckung der Dachplatte. Wie bereits erwähnt könnte die Vertiefung 4 wie der dazu benachbarte stegförmige Vorsprung der ersten Halteeinrichtung auch kurvig, beispielsweise in Draufsicht zur firstseitigen Begrenzung A konkav verlaufend gestaltet sein, wenn auch auf der Überlappungsseite die dort vorgesehene zweite Halteeinrichtung 10 entsprechen konvex gebildet ist, so dass jeweils die Vorsprünge 3 in die entsprechend gebildeten Vertiefungen 10 eingreifen können. Mit anderen Worten müssen die Vorsprünge und Vertiefungen jeweils auf der Oberseite der Unterlappung und der Unterseite der Überlappung so ausgebildet sein, dass hierüber zwei Dachplatten aufeinander folgend miteinander verkettet und aneinander fixiert werden können.

Figuren 1 und 4A zeigen, dass auf der Sichtfläche oder Oberseite 6 oder in einer nicht dargestellten Aussparung in der Sichtfläche oder Oberseite 6 das erwähnte Photovoltaikelement 2 angeordnet ist. Das Photovoltaikelement 2 kann beispielsweise ein Photovoltaiklaminat sein. Die Anschlüsse des Photovoltaikelements 2 können beispielsweise in einer in Figur 2 gezeigten Öffnung 14 auf der Unterseite 30 der Dachplatte 1 angeordnet bzw. eingebettet sein.

In den Figuren 1, 5A, 5B und 6 ist dargestellt, dass die Dachplatte 1 kantenseitig angeordnete und durchgehende dritte Vertiefungen 7 auf der Sichtfläche oder Oberseite 6 aufweist. Diese dritten Vertiefungen 7, die Dichtnuten darstellen, können eine Dichtung aufnehmen. Zwischen kantenseitig benachbarten Dachplatten 1 kann beispielsweise eine nicht dargestellte Dichtung in die jeweiligen dritten Vertiefungen 7 der Dachplatten 1 eingreifen, so dass kein Wasser zwischen kantenseitig benachbarte Dachplatten 1 eindringen kann.

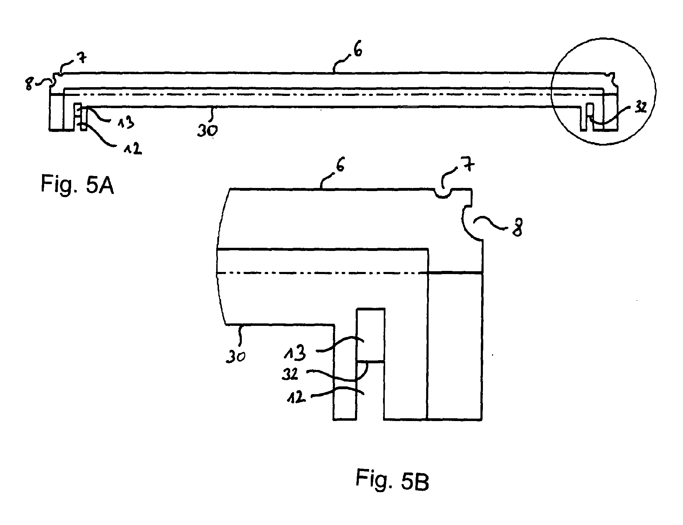

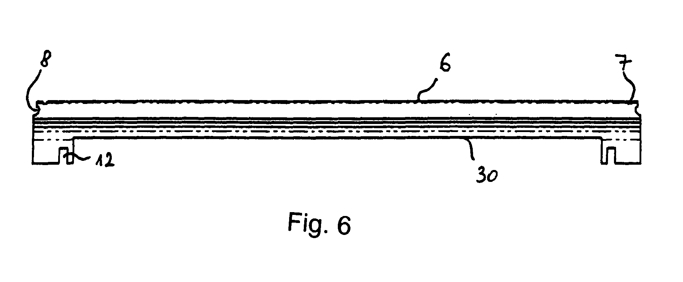

Figuren 5A, 5B und 6 zeigen, dass die erfindungsgemäße Dachplatte 1 auch kantenseitig, also an den Seitenbegrenzungen C1, C2 angeordnete und durchgehende vierte Vertiefungen 8 aufweisen kann, die unterhalb der Sichtfläche oder Oberseite 6 auf einer Flanke der Dachplatte 1 angeordnet sind. Diese vierten Vertiefungen 8 sind seitliche Dichtnuten, die der Aufnahme einer Dichtung dienen. So kann beispielsweise zwischen zwei kantenseitig, also zwei an ihren Seitenbegrenzungen C1, C2 benachbarten Dachplatten, die im verlegten Zustand so angeordnet sind, dass zwischen ihren benachbarten und aufeinander zuweisenden Seitenbegrenzungen C1, C2 ein geringer Abstandsspalt gebildet ist, eine Dichtung angeordnet sein, die in die dritten Vertiefungen 7 und in die vierten Vertiefungen 8 der Dachplatten 1 eingreift. Die vierten Vertiefungen 8 dienen folglich dazu, durch die dritten Vertiefungen 7 eingedrungenes Wasser davor abzuhalten, auf die Unterkonstruktion des Daches durchgeleitet zu werden.

In den Figuren 2 und 3 ist dargestellt, dass die erfindungsgemäße Dachplatte 1 ferner eine in der Überlappung 15 angeordnete zweite Vertiefung 9 umfassen kann. Die zweite Vertiefung 9 ist traufenseitig der zweiten Halteeinrichtung 10 angeordnet. In der zweiten Vertiefung 9 kann eine nicht dargestellte Dichtung eingebettet sein, so dass zwischen die Überlappung 15 einer firstseitigen Dachplatte 1 und einer Unterlappung 5 einer traufenseitigen Dachplatte 1 eingedrungenes Wasser davon abgehalten wird, tiefer in den Zwischenraum zwischen Überlappung 15 und Unterlappung 5 einzudringen.

Die Figuren 2, 4B, 5A und 5B zeigen, dass am firstseitigen Ende der Abstützvorrichtung 12a, 12b der Dachplatte 1 die Abstützvorrichtung 12a, 12b eine Auskippschräge 13 aufweist. Die Auskippschräge 13 stellt somit den Abschnitt der Abstützeinrichtung 12a, 12b der Dachplatte 1 am firstseitigen Ende dar, der sich über eine Teillänge der Dachplatte 1 erstreckt, wobei die Abstützeinrichtung 12a, 12b den Freiraum 34 im Abstand zur Montagefläche 32 bildet.

Figur 4A zeigt eine Draufsicht auf eine erfindungsgemäße Dachplatte 1. Figur 4B zeigt einen Querschnitt entlang der Ebene A-A der in Figur 4A gezeigten Dachplatte 1. Aus Figur 4B ist der Verlauf der Auskippschräge 13 ersichtlich. Die Auskippschräge 13 verläuft nicht parallel zu der Montagefläche 32, die durch die übrige Abstützeinrichtung 12a, 12b definiert ist. Aufgrund der Auskippschräge 13 lässt sich die erfindungsgemäße Dachplatte 1 traufenseitig anheben, so dass die Auskippschräge 13 auf einer unter der Dachplatte 1 angeordneten Trägervorrichtung 16 aufliegt, wobei in diesem Auskippzustand die Montagefläche 32 nicht mehr auf der Trägervorrichtung 16 aufliegt.

Figur 5A zeigt eine Seitenansicht einer erfindungsgemäßen Dachplatte 1 entlang der Blickrichtung First-Traufe. Figur 5B zeigt eine vergrößerte Darstellung des umrandeten Bereichs der Dachplatte 1, die in Figur 5A dargestellt ist. Die Auskippschräge 13 ist am firstseitigen Ende der Abstützeinrichtung 12 angeordnet, wobei die Dachplatte 1 über die Auskippschräge 13 auskippbar ist, so dass sich das traufenseitige Ende der Dachplatte 1 von einer unterhalb der Dachplatte 1 angeordneten Trägervorrichtung 16 löst und die Auskippschräge 13 flächig auf der Trägervorrichtung 16 aufliegt.

Schließlich wird noch angemerkt, dass die Länge, in der die Auskippschräge 13 an der Dachplatte ausgebildet ist bevorzugt größer ist als die Dicke der Dachplatte (also senkrecht zur Oberseite gemessen) und vorzugsweise kleiner als die dreifache Dicke der Dachplatte. Bevorzugt soll sich die Auskippschräge 13 in einer Länge der Dachplatte, also in Längsrichtung (entsprechend der Verkettungsrichtung) erstrecken, die etwa dem 1,5-fachen bis dem 2,5-fachen, insbesondere ungefähr dem 2-fachen der Dicke der Dachplatte entspricht.

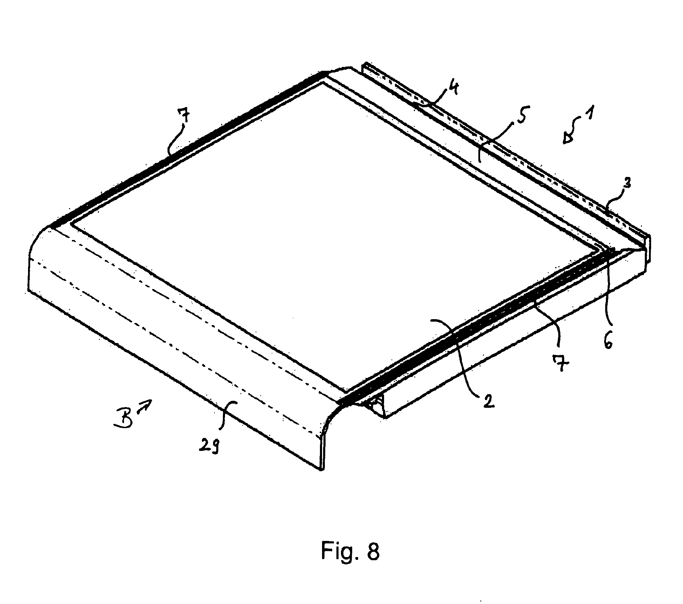

Figur 8 zeigt eine bevorzugte Ausgestaltung einer erfindungsgemäßen Dachplatte 1. Die in Figur 8 gezeigte Dachplatte 1 umfasst eine erste Wandung 29, die sich traufenseitig (also auf der Seite B) an die Sichtfläche oder Oberseite 6 anschließt und sich von der Sichtfläche oder Oberseite 6 weg gewandt traufenseitig nach unten erstreckt. Diese erste Wandung 29 wird auch als Traufenwandung bezeichnet und wirkt einem Eindringen von Wasser und Wind von der Traufe in den Dachunterraum entgegen. Des Weitern wird in Richtung Traufe ablaufendes Wasser beispielsweise in eine Dachrinne abgeführt.

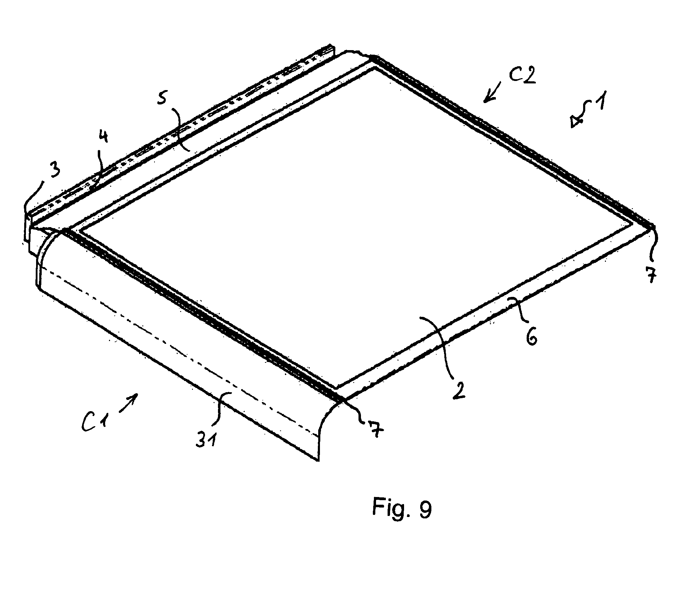

Figur 9 zeigt eine weitere bevorzugte Ausgestaltung einer erfindungsgemäßen Dachplatte 1. Die in Figur 9 gezeigte Dachplatte 1 umfasst ferner eine zweite Wandung 31, die sich kantenseitig (Seite C1) an die Sichtfläche oder Oberseite 6 anschließt und sich von der Sichtfläche oder Oberseite 6 weg gewandt kantenseitig nach unten erstreckt. Diese zweite Wandung 31 wird auch als Ortgangwandung 30 bezeichnet und wirkt einem Eindringen von Wasser und Wind von der Seite in den Dachunterraum entgegen. Des Weiteren werden Windbretter und der First vor Feuchtigkeit durch die zweite Wandung 31 geschützt.

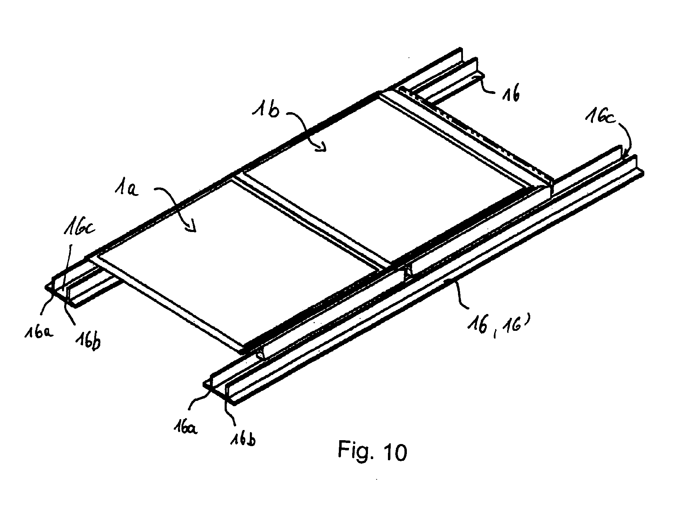

Figur 10 zeigt eine isometrische Darstellung eines Dacheindeckungssystems gemäß der vorliegenden Erfindung. Das Dacheindeckungssystem umfasst mindestens eine erste Dachplatte 1a und eine zweite Dachplatte 1b, wobei die Überlappung 15 der zweiten Dachplatte 1b die Unterlappung 5 der ersten Dachplatte 1a überlappt, und wobei die erste Halteeinrichtung 3 der ersten Dachplatte 1a und die zweite Halteeinrichtung 10 der zweiten Dachplatte 1b ineinander greifen oder einander hintergreifen, so dass die erste und die zweite Dachplatte 1a, 1b miteinander verbunden sind. Die in Figur 10 gezeigten Dachplatten 1a und 1b sind auf einer Trägervorrichtung 16 angeordnet, die zwischen den Dachplatten 1a, 1b und einem nicht dargestellten Dach angeordnet sind. Die Abstützeinrichtungen 12a, 12b der ersten und der zweiten Dachplatte 1a, 1b sind auf der Trägervorrichtung 16 abgestützt, so dass die Montagefläche 32 der ersten und der zweiten Dachplatte 1a, 1b auf der Trägervorrichtung 16 aufliegt. Dabei ist die erste Dachplatte 1a traufenseitig von der Trägervorrichtung 16 dadurch auskippbar, dass der sich über die Teillänge der Dachplatte 1a erstreckende Abschnitt der Abstützeinrichtung 12a, 12b auf der Trägervorrichtung 16 zum Aufliegen kommt. Der entsprechende Auskippvorgang ist oben mit Bezug auf die Figuren 7A bis 7D detailliert dargestellt. Durch das Auskippen wird die Verbindung zwischen der ersten Dachplatte 1a und der zweiten Dachplatte 1b gelöst, ohne dass die benachbarten Dachplatten von der Trägervorrichtung 16 gelöst bzw. angehoben werden müssen.

Aus Figur 10 ist ersichtlich, dass eine auf einer Trägervorrichtung 16 angeordnete Dachplatte 1 entlang der Trägervorrichtung 16 frei verschiebbar ist, solange die Dachplatte 1 nicht traufenseitig und/oder firstseitig mit anderen Dachplatten 1 verbunden ist.

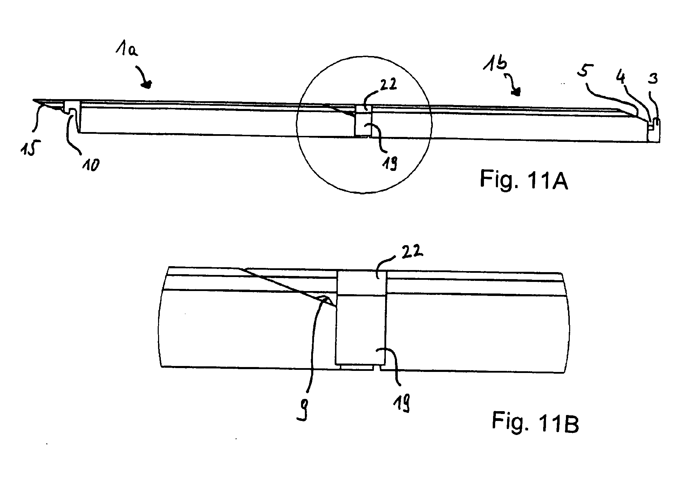

Aus Figur 10 ist ersichtlich, dass die Trägervorrichtung 16 ein Träger- oder Montageprofil 16' mit einer Grundfläche und zwei voneinander beabstandeten Stegen 16a, 16b ist. Von daher kann das Träger- oder Montageprofil 16' nach Art eines U-Profils oder eins Doppel-TT-Profils oder dergleichen ausgebildet sein. Dabei stützen sich die Abstützeinrichtungen 12a, 12b der ersten Dachplatte 1a und der zweiten Dachplatte 1b auf den Stegen 16a, 16b ab. Aus Figur 10 ist ersichtlich, dass in den Zwischenraum zwischen Unterlappung 5 und Überlappung 15 eingedrungenes Wasser über die erste Vertiefung 4 in den Zwischenraum zwischen die Stege 16a und 16b der Trägervorrichtung 16 abgeleitet werden kann. Das in den Zwischenraum 16c zwischen die Stege 16a und 16b der Trägervorrichtung 16 geleitete Wasser wird dann Richtung Traufe des Daches in dem Trägerprofil 16 abgeleitet. Figur 11A zeigt eine Seitenansicht einer ersten Dachplatte 1a und einer zweiten Dachplatte 1b, die miteinander verbunden sind. Kantenseitig der ersten und zweiten Dachplatten 1a und 1b können hier nicht dargestellte Dachplatten weiterhin angeordnet sein. Aus Figur 11A ist ersichtlich, dass zwischen kantenseitig benachbarten Dachplatten 1 traufenseitig eine Öffnung 22 gebildet ist, in die ein Abstandshalter 19 einbringbar ist. Dieser Abstandshalter 19 kann auch als Druckquader 19 bezeichnet werden und dient der Erhöhung der mechanischen Sicherheit der Dachplatten 1. Durch eine Verklemmung durch den Abstandshalter 19 werden Dachplatten 1 beispielsweise gegen das Ausheben durch einen Windsog gesichert. Weiterhin wirken die Abstandshalter 19 einem übereinander Schieben der Dachplatten 1 entgegen, wenn die Dachplatten 1 von oben belastet werden, wenn beispielsweise das Dachsystem durch eine Person begangen wird. Der Druckquader 19 kann durch die Öffnung 22 zwischen zwei Dachplatten 1 eingefügt und über die Öffnung 22 mittels einem nicht dargestellten Werkzeug wieder entfernt werden.

Insbesondere die Darstellung gemäß Figur 10 zeigt auch, dass die in der Regel in der Falllinie auf einer Dachunterkonstruktion montierten Träger- oder Montageprofile 16' (also die Trageinrichtung 16) mit parallelem Abstand zueinander so montiert werden, dass jeweils eine Dachplatte 1 in Breitenerstreckung, also quer zu den Träger-oder Montageprofilen 16' verlaufend, breiter ist als der Abstand der näher zueinander liegenden Stege oder Schenkel 16b des einen Träger- oder Montageprofils 16 und des benachbarten nächsten Stegs 16a. Auch dadurch wird gewährleistet, dass eventuell Wasser in der Dachplatte, welches durch die an den Seitenbegrenzungen C1, C2 anzuordnenden Dichtungen nicht zurück gehalten werden kann, nur in den darunter befindlichen Kanal 16c, also dem Zwischenraum 16c zwischen den jeweils benachbarten Stegen 16a, 16b eines Träger- oder Montageprofils 16' ablaufen und hierüber nach unten abgeführt werden kann. Auch dadurch bleibt die gesamte Dachunterkonstruktion stets trocken.

Mit anderen Worten entspricht der Abstand zwischen zweier parallel und in der Regel horizontal zueinander versetzt zu montierender Träger- oder Montageprofile 16' vom Grundsatz der Breitenerstreckung einer Dachplatte 1 zwischen ihren Seitenbegrenzungen C1, C2, wobei in der Praxis das Breitenmaß einer Dachplatte demgegenüber geringfügig kleiner ist, um zwischen zwei in der horizontalrichtung nebeneinander sitzenden Dachplatten einen geringen Abstandsraum zu schaffen, indem eine Dichtlippe eingesetzt werden kann, wodurch der geringe Abstand zwischen den benachbart zueinander liegenden Seitenbegrenzungen C1, C2 zweier seitlich nebeneinander liegender Dachplatten überbrückt werden soll. Auch dies eröffnet im Übrigen die Möglichkeit bei thermischen Ausdehnungen von Dachplatten in Quer- oder in der Regel in Horizontalrichtung, dass die sich in dem Abstandsspalt zwischen zueinander benachbarten Dachplatten befindliche Dichtung nur weiter zusammengepresst oder bei Temperaturabkühlung wieder entspannen kann, Temperaturausdehnungen also in soweit möglich sind.

Figur 11B zeigt eine Vergrößerung des in Figur 11A umrandet gezeigten Abschnitt.

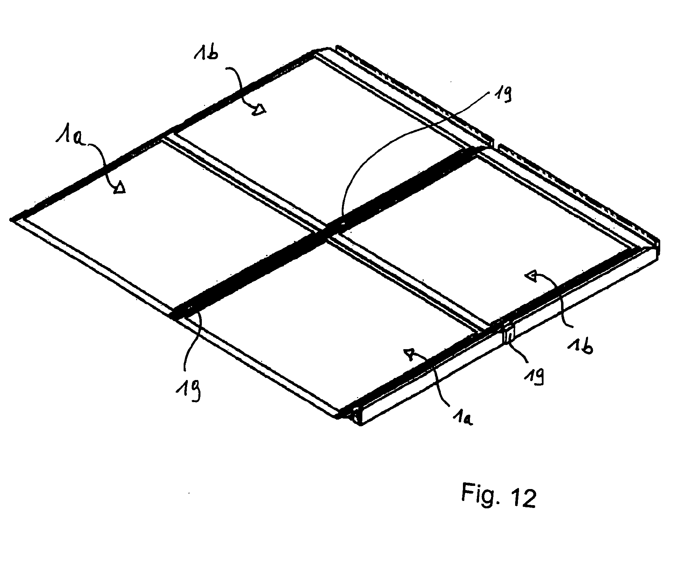

Figur 12 zeigt vier miteinander verbundene Dachplatten 1a, 1b. Sowohl zwischen den firstseitig angeordneten Dachplatten 1b als auch zwischen den traufenseitig angeordneten Dachplatten 1a sind Druckquader 19 angeordnet. Durch das Entfernen des Druckquaders 19, der zwischen den firstseitigen Dachplatten 1b angeordnet ist, könnten die firstseitigen Dachplatten 1b beispielsweise wie oben beschrieben aus dem Verbund heraus gekippt werden.

Die Erfindung ist anhand einer Dachplatte beschrieben worden, die aus unterschiedlichstem Material, bevorzugt licht- und hitzebeständigem Kunststoff hergestellt sein kann, wobei die Dachplatte als Träger und Aufnahmeeinrichtung insbesondere für Photovoltaikelemente dient. Die Dachplatte kann dabei bevorzugt in Draufsicht quadratisch oder rechteckförmig gestaltet oder dieser in Grundform angenähert sein. Die Seitenbegrenzungen A, B, C1, C2 müssen aber nicht zwingend gerade verlaufen. So könnte beispielsweise die firstseitige Begrenzung A einer Dachplatte 1 zumindest leicht konkav oder z. B. mit einer trapezförmigen in die Dachplatte hineingreifenden Ausnehmung gestaltet und die entsprechende traufenseitige Seitenbegrenzung B der Dachplatte entsprechend konvex oder z. B. mit einem trapezförmigen Vorsprung gestaltet sein, so dass jeweils in Anbaurichtung aufeinander folgende Dachplatten (üblicherweise vom First zur Traufe aufeinander folgen) längs der Falllinie miteiander zusammengefügt und verkettet werden können, um einen geschlossenen Verbund zu ergeben. Eindringendes Wasser kann wie erläutert auch bei dieser Ausführungsform problemlos zur Seite hin in den Aufnahmekanal der Trägervorrichtung, d. h. der Trägerprofile abfließen.

Von daher werden die Trägervorrichtungen 16, d. h. die Trägerprofile 16' ebenfalls bevorzugt vom First zur Traufe verlaufend montiert, d.h. parallel mit Seitenabstand zueinander verlaufend auf ein Dach montiert, in der Regel ebenfalls in der Falllinie liegend.

Nur der Vollständigkeit halber wird angemerkt, dass die Dachplatte von den vorstehend erläuterten Grundformen in Draufsicht weitere Abweichungen aufweisen kann, allgemein können die Seitenbegrenzungen A, B, C1, C2 auch mit geraden oder kurvigen Abschnitten versehen sein. Grundsätzlich wären beispielsweise auch von der Viereckform abweichende Grundformen der Dachplatte denkbar, beispielsweise eine sechseckige Grundform.

Die erfindungsgemäße Dachkonstruktion mit den miteinander verketteten und gleichwohl problemlos einzeln lösbaren und ersetzbaren Dachplatten weisen den Vorteil auf, dass sie vom First zur Traufe, also in der Regel in der Falllinie verlegt problemlos miteinander verkettbar sind und dabei gleichwohl einzelne Dachplatten problemlos austauschbar sind. Da die Verkettungsrichtung parallel zu den Trageinrichtungen 16, also den Träger- und Montageprofilen 16' erfolgt, eröffnet dies ferner die Möglichkeit, dass bei einer temperaturbedingten Ausdehnung sich die erläuterten Dachplatten auf den Montageprofilen sitzend in Richtung First (wenn sie traufenseitig abgestützt sind) ausdehnen können, also auf den Trag- oder Montageprofilen 16' temperaturbedingt eine partielle Verschiebung trotz der angebrachten Klemmeinrichtungen durchführen können (wobei zum Längenausgleich einer ganzen Reihe nebeneinander angeordneter Dachplatten 1 am höchsten Punkt des Daches auf dem First eine Firstabdeckung vorgesehen ist, unterhalb derer die oberste Dachplatte unterschiedlich weit eintauchen kann).

Somit wird im Rahmen der vorliegenden Erfindung eine geschlossene Dachkonstruktion unter Vermeidung separater Dachplatten realisiert, die zudem dicht ist und eine Wasserablaufmöglichkeit schafft, und die auch keine Probleme im Falle temperaturbedingter Ausdehnungen aufweist. Temperaturbedingte Querausdehnungen zwischen benachbarter Platten sind möglich und durch zwischen den Längsseiten den Dachplatten eingreifender Gummidichtelemente verschließbar. Sollte hier Wasser durchlaufen, kann es ebenfalls durch den sich darunter befindlichen Ablaufkanal der hier vorgesehenen Montageprofile nach unten hin ablaufen.

### Bezugszeichenliste:

- 1: Dachplatte
- 2: Photovoltaikelement
- 3: erste Halteeinrichtung
- 4: erste Vertiefung
- 5: Unterlappung
- 6: Sichtfläche oder Oberseite
- 7: dritte Vertiefung
- 8: vierte Vertiefung
- 9: zweite Vertiefung
- 10: Halteeinrichtung
- 11: Montageschräge
- 12, 12a, 12b: Abstützeinrichtung
- 13: Auskippschräge
- 14: Öffnung für Photovoltaikelementanschlüsse
- 15: Überlappung
- 16: Trägervorrichtung
- 16': Träger- oder Montageprofil
- 16a, 16b: Steg der Trägervorrichtung
- 16c: Zwischenraum/Kanal
- 29: erste Wandung
- 30: Unterseite der Dachplatte
- 31: zweite Wandung
- 32: Montagefläche
- 34: Freiraum
- 34': Abschnitt
- A: firstseitige Begrenzung
- B: traufenseitige Begrenzung
- C1: seitliche Begrenzung
- C2: seitliche Begrenzung

## Patentansprüche

1. Dachplatte (1), umfassend:
- eine Sichtfläche oder Oberseite (6),
- eine zur Sichtfläche oder Oberseite (6) gegenüberliegende Unterseite (30),
- eine firstseitige Unterlappung (5),
- eine traufenseitige Überlappung (15),
- eine erste Halteeinrichtung (3), die auf/in der Unterlappung (5) oder firstseitig der Unterlappung (5) angeordnet ist,
- eine zweite Halteeinrichtung (10), die auf/in der Überlappung (15) oder firstseitig der Überlappung (15) angeordnet ist,
- eine auf der Unterseite (30) der Dachplatte (1) angeordnete Abstützeinrichtung (12a, 12b), die eine Ausricht- und/oder Montagefläche (32) definiert, und wobei die Abstützeinrichtung (12a, 12b) und/oder die Unterseite (30) der Dachplatte (1) einen sich vom firstseitigen Ende aus über eine Teillänge der Dachplatte (1) erstreckenden Abschnitt (34') aufweist, in welchem die Abstützeinrichtung (12a, 12b) und/oder die Unterseite (30) der Dachplatte (1) unter Ausbildung eines Freiraums (34) im Abstand zur Montagefläche (32) verläuft, **dadurch gekennzeichnet, dass**
- die Dachplatte (1) mit einer anderen firstseitig angeordneten Dachplatte dadurch verkettbar ist, dass die erste Halteeinrichtung (3) der Dachplatte (1) mit einer zweiten Halteeinrichtung (10) der firstseitig angeordneten Dachplatte verbunden wird, und/oder
- die Dachplatte (1) mit einer anderen traufenseitig angeordneten Dachplatte dadurch verkettbar ist, dass die zweite Halteeinrichtung (10) der Dachplatte (1) mit einer ersten Halteeinrichtung (3) der traufenseitig angeordneten Dachplatte verbunden wird.

2. Dachplatte (1) gemäß Anspruch 1, ferner umfassend eine erste Vertiefung (4), die firstseitig der Sichtfläche oder Oberseite (6) im Bereich der Unterlappung (5) angeordnet ist.

3. Dachplatte (1) gemäß einem der vorangehenden Ansprüche, ferner umfassend eine in der Überlappung (15) angeordnete zweite Vertiefung (9).

4. Dachplatte (1) gemäß einem der vorangehenden Ansprüche, ferner umfassend kantenseitig angeordnete durchgehende dritte Vertiefungen (7) auf der Sichtfläche oder Oberseite (6).

5. Dachplatte (1) gemäß einem der vorangehenden Ansprüche, ferner umfassend kantenseitig angeordnete durchgehende vierte Vertiefungen (8), die unterhalb der Sichtfläche oder Oberseite (6) auf einer Flanke der Dachplatte (1) angeordnet ist.

6. Dachplatte (1) gemäß einem der vorangehenden Ansprüche, ferner umfassend eine Dachplatten-Halteeinrichtung, die unterhalb der Sichtfläche oder Oberseite (6) der Dachplatte (1) angeordnet ist.

7. Dachplatte (1) gemäß einem der vorangehenden Ansprüche, ferner umfassend
a) eine erste Wandung (29), die sich traufenseitig an die Sichtfläche oder Oberseite (6) anschließt und sich von der Sichtfläche oder Oberseite (6) weggewandt traufenseitig nach unten erstreckt,
und/oder
b) eine zweite Wandung (31), die sich kantenseitig an die Sichtfläche oder Oberseite (6) anschließt und sich von der Sichtfläche oder Oberseite (6) weggewandt kantenseitig nach unten erstreckt,
und/oder
c) eine dritte Wandung, die sich firstseitig an die Sichtfläche oder Oberseite (6) anschließt und sich von der Sichtfläche oder Oberseite (6) weggewandt firstseitig nach oben erstreckt.

8. Dachplatte (1) gemäß einem der vorangehenden Ansprüche, wobei der Freiraum (34) durch eine Auskippschräge (13) gebildet ist, die von der Montagefläche (32) und/oder der Abstützeinrichtung (12a, 12b) und/oder der Unterseite (13) der Dachplatte (1) in einer Teillänge der Dachplatte (1) zum firstseitigen Ende hin zumindest abschnittsweise mit einer Komponente in Richtung Sichtfläche oder Oberseite (6) der Dachplatte hin ansteigend verläuft.

9. Dachplatte (1) gemäß einem der vorangehenden Ansprüche, wobei der Freiraum (34) durch eine zum firstseitigen Ende hin über eine Teillänge der Dachplatte (1) in einem spitzen Winkel vorzugsweise gerade verlaufende Auskippschräge gebildet ist.

10. Dachplatte (1) gemäß einem der vorangehenden Ansprüche, ferner umfassend eine Aussparung, die in der Sichtfläche oder Oberseite (6) der Dachplatte (1) angeordnet ist.

11. Dachplatte (1) gemäß einem der vorangehenden Ansprüche, ferner umfassend ein Photovoltaikelement (2), dass auf der Sichtfläche oder Oberseite (6) oder in der Aussparung angeordnet ist.

12. Dachplatte (1) gemäß einem der vorangehenden Ansprüche, wobei die Dachplatte (1) auf der Unterseite (30) eine Rippenkonstruktion aufweist.

13. Dacheindeckungssystem, umfassend:
- mindestens eine erste Dachplatte (1, 1a) und eine zweite Dachplatte (1, 1b) jeweils nach einem der Ansprüche 1 bis 12, wobei die Überlappung (15) der zweiten Dachplatte (1, 1b) die Unterlappung (5) der ersten Dachplatte (1, 1a) überlappt, und wobei die erste Halteeinrichtung (3) der ersten Dachplatte (1, 1a) und die zweite Halteeinrichtung (10) der zweiten Dachplatte (1, 1b) ineinander greifen oder einander hintergreifen, so dass die erste und die zweite Dachplatte (1, 1a, 1b) miteinander verbunden sind;
- mindestens eine Trägervorrichtung (16), auf die die Abstützeinrichtungen (12a, 12b) der ersten und der zweiten Dachplatte (1, 1a, 1b) im Bereich ihrer Montagefläche (32) auf der Trägervorrichtung (16) aufliegen, und
- wobei die erste Dachplatte (1, 1a) traufenseitig von der Trägervorrichtung (16) dadurch auskippbar ist, dass die Unterseite des Freiraums (34) und/oder der Auskippschräge (13) zumindest in einer Teillänge und/ oder mit seinem traufenseitigen und/oder am Übergangsbereich zur Montagefläche (32) und der Anhebung des verbleibenden Restes der Dachplatte (1, 1a, 1b) zum Aufliegen kommt, wobei durch das Auskippen die Verbindung zwischen der ersten Dachplatte (1, 1a) und der zweiten Dachplatte (1, 1b) lösbar und durch eine umgekehrte Kippbewegung die Verbindung zwischen der ersten Dachplatte (1, 1a) und der zweiten Dachplatte (1, 1b) herstellbar ist.

14. Dacheindeckungssystem nach Anspruch 13, wobei die Trägervorrichtung (16) ein Trägerprofil mit einer Grundfläche mit zwei von einander beabstandeten Stegen (16a, 16b) ist, wobei die Abstützeinrichtungen (12a, 12b) auf den Stegen (16a, 16b) abstützbar sind.

15. Dacheindeckungssystem nach Anspruch 13 oder 14, wobei zwischen zwei kantenseitig benachbarten Dachplatten (1) traufenseitig eine Öffnung (22) gebildet ist, in die ein Abstandshalter (19) einbringbar ist.
